# EUROPEAN PATENT APPLICATION

(11) **EP 2 631 850 A1**
(43) Date of publication of application: **28.08.2013**
(21) Application number: 12156664.0
(22) Date of filing: 23.02.2012

(54) **Method, system and apparatus for managing electronic subscriptions at a communication device**

(71) Applicant: Research In Motion Limited, Waterloo, ON N2L 3W8 (CA)
(72) Inventor: May, Darrell, Reginald, Waterloo Ontario N2L 3W8 (CA); Ewanchuk, Andrew, John, Waterloo Ontario N2L 3W8 (CA); Cherry, Carl, Lloyd, Waterloo Ontario N2L 3W8 (CA)
(74) Representative: MERH-IP Matias Erny Reichl Hoffmann

(57) **Abstract**

A method, system and apparatus for managing electronic subscriptions are provided. An indication of unsubscribing to an electronic subscription is stored. Thereafter: at least one message in the electronic subscription is received; and the at least one message is prevented from being stored at an inbox folder in a memory associated with the communication device.

## Description

### FIELD

The specification relates generally to communication devices, and specifically to a method, system and apparatus for managing electronic subscriptions at a communication device.

### BACKGROUND

The evolution of computers is currently quite active in the communication device environment. It is now well-known to including calendaring, contacts, and messaging functions in communication devices. More recently, there has been a veritable explosion of the number and type of applications that are configured to the unique form factors and computing environments of the different types of communication devices.

### SUMMARY

An aspect of the specification provides a communication device comprising: a processor and a communication interface, the processor enabled to: store an indication of unsubscribing to an electronic subscription; and thereafter: receive, via the communication interface, at least one message in the electronic subscription; and, automatically prevent the at least one message from being stored at an inbox folder in a memory associated with the communication device.

The processor can be further enabled to automatically prevent the at least one message from being stored at the inbox folder by deleting the at least one message.

The processor can be further enabled to automatically prevent the at least one message from being stored at the inbox folder by storing the at least one message in a given folder different from the inbox folder. The given folder can comprise a deleted messages folder.

The processor can be further enabled to automatically prevent the at least one message from being stored at the inbox folder without an indication of the at least one message being provided at the communication device.

The processor can be further enabled to automatically repeat the unsubscribing in response to receiving the at least one further message.

The processor can be further enabled to store a format for the unsubscribing at the memory for use in further unsubscribing to the electronic subscription.

The format for the unsubscribing can be stored in association with the indication of the unsubscribing.

The processor can be further enabled to store a format for the unsubscribing at a server accessible memory accessible to a server enabled to manage messages for a plurality of communication devices, such that the server can unsubscribe to the electronic description on behalf of one or more of the plurality of the communication devices.

Another aspect of the specification provides a method comprising: at a communication device comprising a processor and a communication interface, storing an indication of unsubscribing to an electronic subscription; and thereafter: receiving, via the communication interface, at least one message in the electronic subscription; and, automatically preventing, via the processor, the at least one message from being stored at an inbox folder in a memory associated with the communication device.

Automatically preventing the at least one message from being stored at the inbox folder can comprise deleting the at least one message.

Automatically preventing the at least one message from being stored at the inbox folder can comprise storing the at least one message in a given folder different from the inbox folder. The given folder can comprise a deleted messages folder.

Automatically preventing the at least one message from being stored at the inbox folder can occur without an indication of the at least one message being provided at the communication device.

The method can further comprise automatically repeating, at the processor, the unsubscribing in response to receiving the at least one further message.

The method can further comprise storing a format for the unsubscribing at the memory for use in further unsubscribing to the electronic subscription.

The format for the unsubscribing can be stored in association with the indication of the unsubscribing. The method can further comprise storing a format for the unsubscribing at a server accessible memory accessible to a server enabled to manage messages for a plurality of communication devices, such that the server can unsubscribe to the electronic description on behalf of one or more of the plurality of the communication devices.

Yet a further aspect of the specification provides a computer program product, comprising a computer usable medium having a computer readable program code adapted to be executed to implement a method comprising: at a communication device comprising a processor and a communication interface, storing an indication of unsubscribing to an electronic subscription; and thereafter: receiving, via the communication interface, at least one message in the electronic subscription; and, automatically preventing, via the processor, the at least one message from being stored at an inbox folder in a memory associated with the communication device. The computer program product can comprise a non-transitory computer program product.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a system for managing electronic subscriptions at a communication device, according to non-limiting implementations.

Fig. 2 depicts a schematic diagram of the communication device of the system of Fig. 1, according to non-limiting implementations.

Fig. 3 depicts a schematic diagram of the server of the system of Fig. 1, according to non-limiting implementations.

Fig. 4 depicts the system of Fig. 1 with a message in an electronic subscription being received at a communication device, according to non-limiting implementations.

Fig. 5 depicts a representation of a messaging application, according to non-limiting implementations.

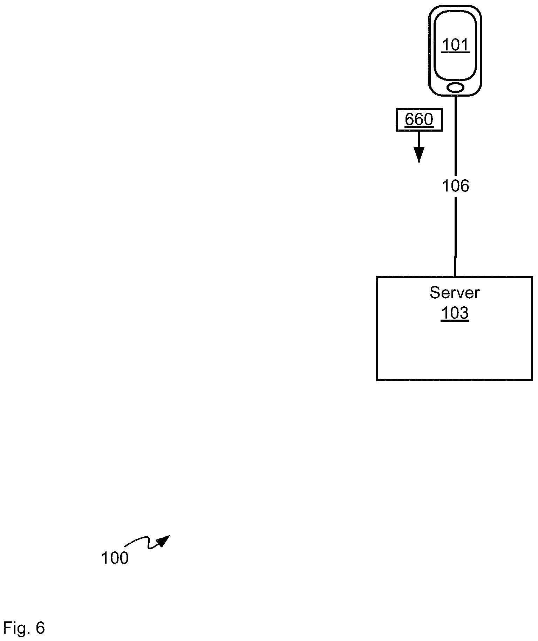

Fig. 6 depicts the system Fig. 1 with an unsubscribe request being transmitted to a server, according to non-limiting implementations.

Fig. 7 depicts a method for managing electronic subscriptions at a communication device, according to non-limiting implementations.

Fig. 8 depicts a schematic diagram of the communication device of the system of Fig. 1 with an indication of unsubscribing stored there at, according to non-limiting implementations.

Fig. 9 depicts the system of Fig. 1 with a further message in an electronic subscription being received at a communication device after unsubscribing has occurred, according to non-limiting implementations.

Fig. 10 depicts a schematic diagram of the communication device of the system of Fig. 1 with a further message in the electronic subscription being deleted, according to non-limiting implementations.

Fig. 11 depicts a schematic diagram of the communication device of the system of Fig. 1 with a further message in the electronic subscription being stored at a given folder different from an inbox folder, according to non-limiting implementations.

Fig. 12 depicts an alternative system for managing electronic subscriptions at a communication device, according to non-limiting implementations.

Fig. 13 depicts a schematic diagram of a communication device of the system of Fig. 12, according to non-limiting implementations.

Fig. 14 depicts an alternative system for managing electronic subscriptions at a communication device, according to non-limiting implementations.

Fig. 15 depicts a schematic diagram of a server of the system of Fig. 14, according to non-limiting implementations.

Fig. 16 depicts the system of Fig. 14, with the server automatically unsubscribing from an electronic subscription on behalf of one or more communication devices, according to non-limiting implementations.

### DETAILED DESCRIPTION

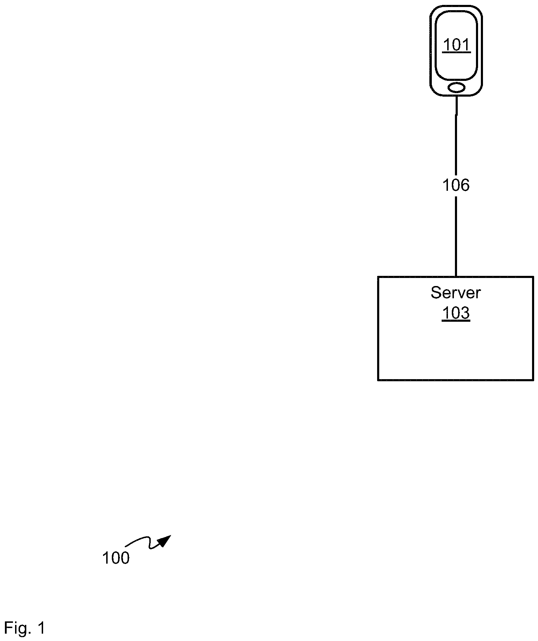

Fig. 1 depicts a system 100 for managing electronic subscriptions at a communication device 101 enabled to receive messages in the electronic subscription from an electronic subscription server 103 via a link 106, according to non-limiting implementations. Communication device 101 will also be referred to hereafter as device 101, and electronic subscription server 103 will also be referred to hereafter as server 103. This convention will be used elsewhere in the present specification. It is further appreciated that device 101 and server 103 can communicate with one another: for example, server 103 can transmit at least one message in an electronic subscription to device 101, as will be explained hereafter.

Indeed, it is generally appreciated that device 101 can be subscribed to receiving messages from server 107 in an electronic subscription. It is further appreciated that the electronic subscription can be unsubscribed via device 101, automatically, manually and a combination thereof.

In any event, at least device 101 is generally enabled to manage such electronic subscriptions, as will be presently explained. In particular, device 101 is enabled to store an indication of unsubscribing to an electronic subscription; and thereafter: receive at least one message in the electronic subscription, in spite of the electronic subscription having being previously unsubscribed; and, automatically preventing the at least one message from being stored at an inbox folder in a memory associated with the communication device.

Hence, when an electronic subscription is unsubscribed, and further messages in the electronic subscription are received, the further messages are conveniently and automatically disposed.

It is further more appreciated that while only one each of device 101 and server 103 is depicted in Fig. 1, system 100 can comprise any suitable number of devices and servers. Indeed, system 100 can comprise: any suitable number of devices for receiving messages in any suitable number of electronic subscriptions, for example device 101; and any suitable number of servers for transmitting messages in any suitable number of email subscriptions, for example server 103.

Device 101 can be any type of electronic device that can be used in a self-contained manner to interact with a communications network via link 106. It is hence appreciated that device 101 comprises any suitable communication device for communicating with server 103. Device 101 includes, but is not limited to, any suitable combination of computing devices, personal computers, laptop computers, portable electronic devices, mobile computing device, portable computing devices, tablet computing devices, laptop computing devices, desktop phones, telephones, PDAs (personal digital assistants), cellphones, smartphones and the like. Other suitable communication devices are within the scope of present implementations.

Link 106 comprises any suitable link, including any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

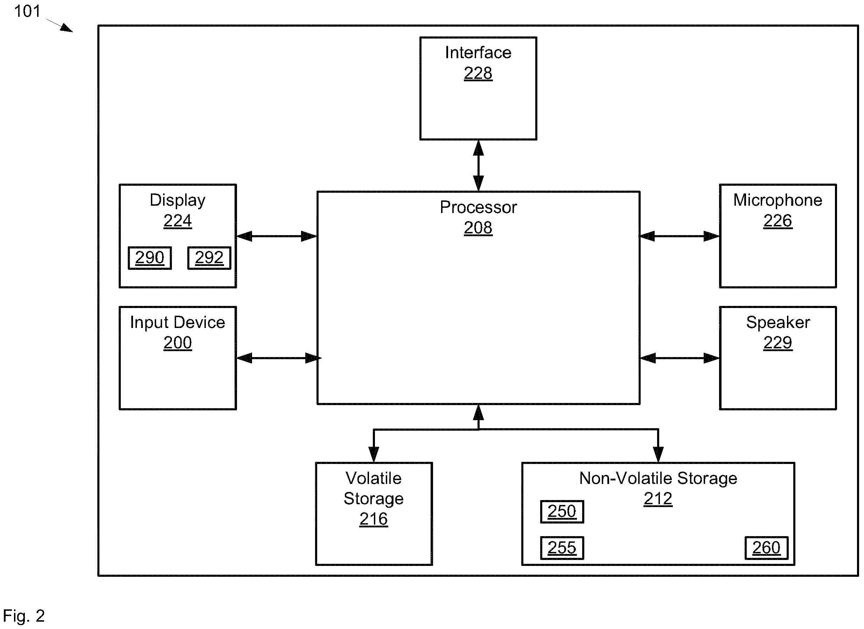

Attention is directed to Fig. 2, which depicts a schematic diagram of device 101 according to non-limiting implementations. It should be emphasized that the structure in Fig. 2 is purely exemplary, and contemplates a device that can be used for both wireless voice (e.g. telephony) and wireless data communications (e.g. email, web browsing, text, and the like). Device 101 comprises at least one input device 200 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Input from input device 200 is received at processor 208 (which can be implemented as a plurality of processors, including but not limited to one or more central processing units (CPUs)). Processor 208 is configured to communicate with a non-volatile storage unit 212 (e.g. Erasable Electronic Programmable Read Only Memory ("EEPROM"), Flash Memory) and a volatile storage unit 216 (e.g. random access memory ("RAM")). Programming instructions that implement the functional teachings of device 101 as described herein are typically maintained, persistently, in non-volatile storage unit 212 and used by processor 208 which makes appropriate utilization of volatile storage 216 during the execution of such programming instructions. Those skilled in the art will now recognize that non-volatile storage unit 212 and volatile storage 216 are examples of computer readable media that can store programming instructions executable on processor 208. Furthermore, non-volatile storage unit 212 and volatile storage 216 are also examples of memory units and/or memory modules.

Processor 208 in turn can also be configured to communicate with a display 224, and optionally a microphone 226 and a speaker 229. Display 224 comprises any suitable one of or combination of CRT (cathode ray tube) and/or flat panel displays (e.g. LCD (liquid crystal display), plasma, OLED (organic light emitting diode), capacitive or resistive touchscreens, and the like). It is generally appreciated that display 224 comprises circuitry 290 that can be controlled, for example by processor 208, to render a representation 292 of data at display 224.

Microphone 226, when present, comprises any suitable microphone for receiving sound data, which can be transmitted to device 101. Speaker 229, when present, comprises any suitable speaker for providing sound data, audible alerts, audible communications from remote communication devices, and the like, at device 101.

In some implementations, input device 200 and display 224 are external to device 101, with processor 208 in communication with each of input device 200 and display 224 via a suitable connection and/or link.

Processor 208 also connects to a network communication interface 228, referred to hereafter as interface 228, which can be implemented as one or more radios configured to communicate over link 106. In general, it will be appreciated that interface 228 is configured to correspond with the network architecture that is used to implement link 106. In other implementations a plurality of links with different protocols can be employed and thus interface 228 can comprise a plurality of interfaces to support each link.

In particular, it is appreciated that non-volatile storage 212 stores an application 250 for managing electronic subscriptions, for example an email messaging application and the like. When processor 208 processes application 250, processor is enabled to: store an indication of unsubscribing to an electronic subscription; and thereafter: receive, via interface 228, at least one message in the electronic subscription; and, automatically prevent the at least one message from being stored at an inbox folder in a memory associated with device, such as an inbox folder 260 stored at non-volatile storage 212.

Non-volatile storage 212 can further store a message application 255 for managing messages, including but not limited to an email application for receiving, rendering, and responding to messages. In some implementations message application 255 can comprise application 250, and/or application 250 can comprise a module of message application 250.

It is further appreciated that upon processing application 250 and/or message application 255, processor 208 can control circuitry 290 in display device 224 to render application 250 and/or message application 255 in representation 292.

It is further appreciated that messages received by device 101, for example messages in an electronic subscription, can be stored at inbox folder 260 at non-volatile storage 212. While inbox folder 260 is generally depicted as a discrete element in Fig. 212, it is appreciated that messages stored in non-volatile storage 212 can be stored in any suitable manner. For example, inbox folder 260 can comprise a directory indicating where each message associated with inbox folder 260 is located in non-volatile storage 212, with each message being stored at any respective suitable location at non-volatile storage 212. Indeed, any suitable configuration of inbox folder 260 is within the scope of present implementations.

In any event, it should be understood that in general a wide variety of configurations for device 101 are contemplated.

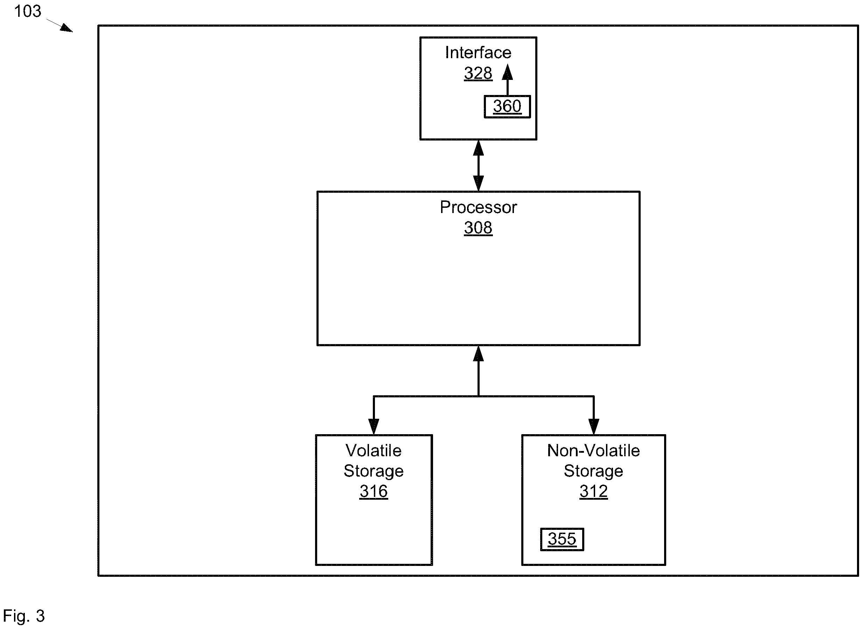

Attention is next directed to Fig. 3, which depicts a schematic diagram of server 103 according to non-limiting implementations. It is appreciated that elements of server 103 can be substantially similar to, or different from, device 101. In any event, Fig. 3 is substantially similar to Fig. 2, with like elements having like numbers, however preceded by a "3" rather than a "2"; for example, processor 308 is substantially similar to processor 208. Specifically, server 103 comprises processor 308, non-volatile storage 312, volatile storage 316, and interface 328.

Server 103 can be based on any well-known server environment including a module that houses one or more central processing units, volatile memory (e.g. random access memory), persistent memory (e.g. hard disk devices) and network interfaces to allow server 103 to communicate over link 106. For example, server 103 can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for servers 103 are contemplated. It is further more appreciated that server 103 can comprise any suitable number of servers that can perform different functionality of server implementations described herein.

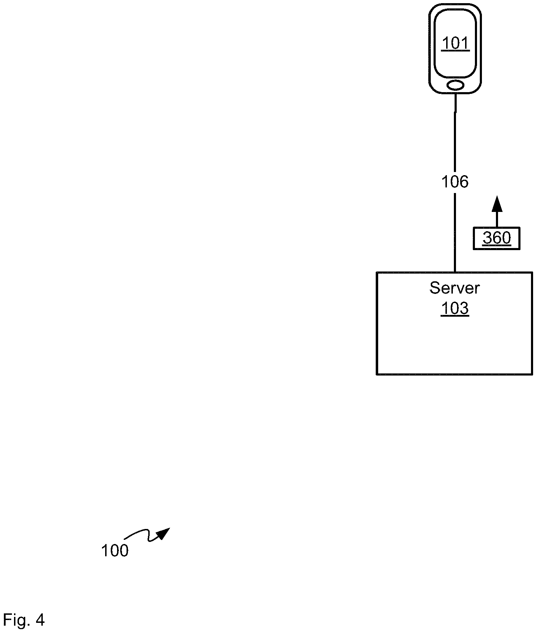

In particular, server 103 is enabled to transmit messages to device 101 in an electronic subscription. For example, presuming that device 101 has been previously subscribed to at least one electronic subscription, server 103 can store a record 355 of the electronic subscription and when a new message 360 associated with the electronic subscription is available, server 103 can process record 355 and transmit message 360 to device 103, as depicted in Fig. 4, which is substantially similar to Fig. 1, with like elements having like numbers. Messages 360 can be acquired for transmission by server 103 in any suitable manner, including but not limited to uploaded by a system administrator, received from an electronic subscription message server and the like.

It is appreciated that while one implementation of electronic subscriptions is within the scope of present implementations, as is any suitable process for subscribing to messages in an electronic subscription.

Indeed, it is further appreciated that any suitable type of electronic subscription is within the scope of present implementations, including but not limited to subscriptions to electronic newsletters, electronic offers, and the like.

It is furthermore appreciated that the term "message" is understood to mean electronic data indicative of messages. Hence, messages 360 can be understood to comprise message data and/or electronic message data that is sent and received via electronic communication devices.

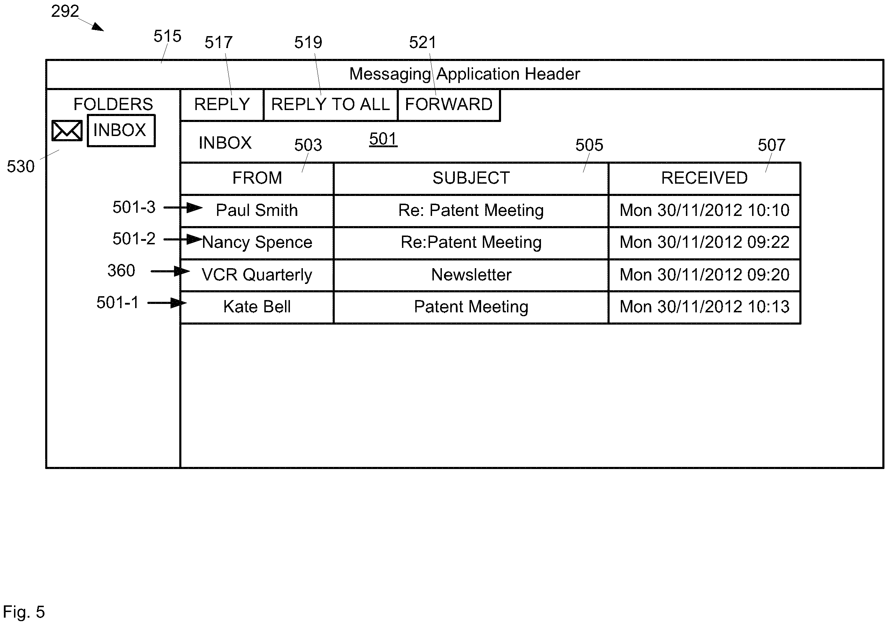

Attention is next directed to Fig. 5 which depicts a representation 292 of an aspect of message application 255 at device 101. Representation 292 comprises a representation 501 ("INBOX") of inbox folder 260 for providing indications of messages received by device 101, including a rendering of a data associated with message 360 in a message list view. For example, representation 501 comprises a list of messages received at device 101 from server 260, as well as any other devices/servers in system 100. Messages 501-l, 501-2, 501-3 are hence appreciated to be from devices other than server 103. Representation 501 further comprises a "FROM" field 503 indicating an identifier of a device from which an associated message is received and/or a user associated with the device. In depicted implementations, field 503 is populated with identifiers of a user associated with a transmitting device. For example, message 360 is "FROM" "VCR Quarterly", (e.g. "VCR" stands for Video Cassette Recorder) an identifier which is hence associated with server 103. Similarly, message 501-1 is "FROM" "Kate Bell", but is appreciated to be transmitted from a device associated therewith. The relationship between text identifying a device can be stored in non-volatile storage 212 and/or be received with each of messages 360, 501 (e.g. in metadata).

Representation 501 further comprises a "SUBJECT" field 505 indicating a subject of an associated message, comprising text received with each messages 360, 201. Representation 501 further comprises a "RECEIVED" field 507 indicating date and/or time when an associated message was received. It is appreciated, however, that the format of representation 501 of inbox folder 260 is not particularly limiting and can have any suitable format; in some implementations, the format can be configurable, for example by receiving input data from input device 200.

It is understood that representation 292 of application 250 can further comprise a header 515 and virtual buttons 517, 519, 521 which, when actuated, can cause processor 208 to respectively initiate a "REPLY", a "REPLY TO ALL", or a "FORWARD" to/of a highlighted message in representation 501.

Representation 292 further comprises an area 530 labelled "FOLDERS" which comprises folder icons associated with available folders, such as "INBOX" icon associated with inbox folder 260 (adjacent the "INBOX" icon is an envelope icon indicating that the "INBOX" icons is associated with a folder storing messages): it is appreciated that area 530 can be interactive, with folder icons rendered therein being selectable, for example by receiving input data from input device 200, such that the contents of representation 501 will change depending which folder icon is selected in area 530. For example, the icon "INBOX" is selected in Fig. 5, as indicated by the box drawn around "INBOX"; however any suitable method of rendering a folder icon in a manner that indicates the folder icon is selected is within the scope of present implementations. Further, while only one folder icon is depicted in area 530 of Fig. 5, any suitable number of folder icons is within the scope of present implementations. Indeed, it is appreciated that any suitable number of folders can be provided for storing messages and area 530 can comprise icons arranges in a structure showing relationships between the folders (e.g. folder, subfolders and the like).

It is also appreciated that while only one message 360 is described herein, and message 360 is received in an electronic subscription, it is appreciated that any number of messages in any number of electronic subscriptions can be received at device 101 and rendered in representation 292. It is further appreciated that message 360, and indeed any messages received in an electronic subscription, generally occupy memory space associated with inbox 260, and further obfuscate representation 501 and inbox folder 260.

For example, electronic subscriptions have become ubiquitous and often devices are subscribed to such electronic subscriptions by third parties, for example when buying and/or registering with product websites: when asked for an email address in such scenarios, a subscription record for the email address is automatically provisioned at an electronic subscription server, such as record 355 at server 103, which then automatically transmits messages in the electronic subscription to a device associated with the email address. Further, electronic subscriptions can be provisioned via a device at which the associated messages are to be received, but messages in the electronic subscription can be routinely ignored and/or deleted. In other words, there are many scenarios where messages in electronic subscriptions serve no purpose and simply waste bandwidth and memory at device 101.

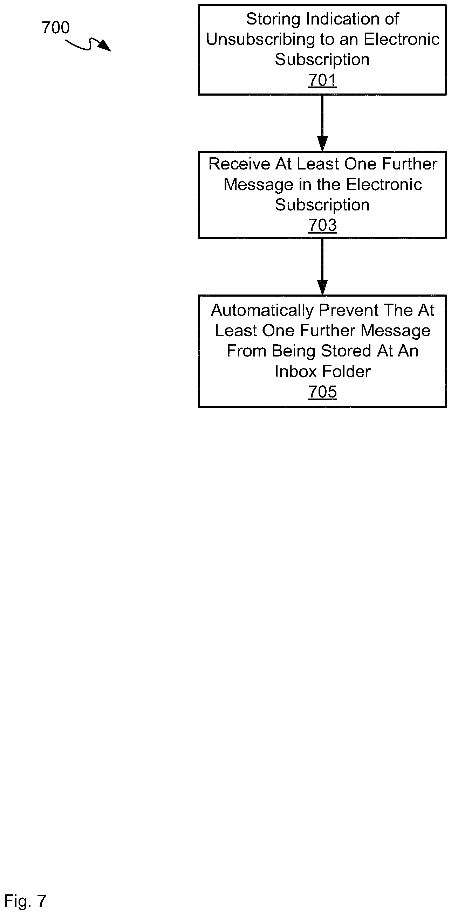

Hence, as depicted in Fig. 7, which is substantially similar to Fig. 1, with like elements having like numbers, device 101 can unsubscribe to an electronic subscription represented by record 355 stored at server 103, by transmitting an unsubscribe request 660 to server 103. Unsubscribe request 660 can generally comprise an identifier of device 101, including but not limited to an email address associated with device 101. Unsubscribe request 660 can be generated in any suitable manner, including but not limited to device 101 accessing server 103, and or an associated server, via a web page interface, and filling in fields at the web page interface to indicate that the electronic subscription is to be unsubscribed to and/or cancelled. In some of these implementations the web page interface can accessed, for example, via a URL (Uniform Resource Locator) in message 360. In yet further implementations, further identifying and/or verifying information, such as a further identifier associated with device 101 and/or a user associated with device 101 (e.g. a telephone number, a postal code, and the like) can be requested in the web page interface. Server 103 can be enabled to not process unsubscribing unless such data is received in unsubscribe request 660. In other implementations, unsubscribe request 660 can be generated via generation of a reply to message 360 with the term "unsubscribe" in a given field of the reply (e.g. in a subject).

Indeed, many different formats for unsubscribe request 660 are contemplated and are within the scope of present implementations.

In any event, once unsubscribing occurs, it is appreciated that record 355 is to be deleted and/or removed at server 103, and hence no further messages in the electronic subscription associated with record 355 are to be received at device 101. This is no always the case however. For example, an error can occur in the unsubscribing such that record 355 is not deleted at server 103. Non-limiting examples of such errors include, but are not limited to, request 660 never arriving at server 103, data in request 660 being corrupted, request 660 being incorrectly processed at server 103, a delay in request 660 being processed at server 103 and the like. Further, in some situations, server 103 can be enabled to implement a delay in processing request 660 in order to prolong the associated electronic subscription, for example for marketing reasons and the like.

Indeed, for any of these reasons, and indeed any suitable reason, unsubscribing to an electronic subscription can be unsuccessful and/or delayed.

Hence attention is now directed to Fig. 7 which depicts a method 700 for managing electronic subscriptions at a communication device, according to non-limiting implementations. In order to assist in the explanation of method 700, it will be assumed that method 700 is performed using system 100. Furthermore, the following discussion of method 700 will lead to a further understanding of system 100 and its various components. However, it is to be understood that system 100 and/or method 700 can be varied, and need not work exactly as discussed herein in conjunction with each other, and that such variations are within the scope of present implementations.

It is appreciated that, in some implementations, method 700 is implemented in system 100 by processor 208 of device 101. Indeed, method 700 is one way in which device 101 can be configured. It is to be emphasized, however, that method 700 need not be performed in the exact sequence as shown, unless otherwise indicated; and likewise various blocks may be performed in parallel rather than in sequence; hence the elements of method 700 are referred to herein as "blocks" rather than "steps". It is also to be understood, however, that method 700 can be implemented on variations of system 100 as well.

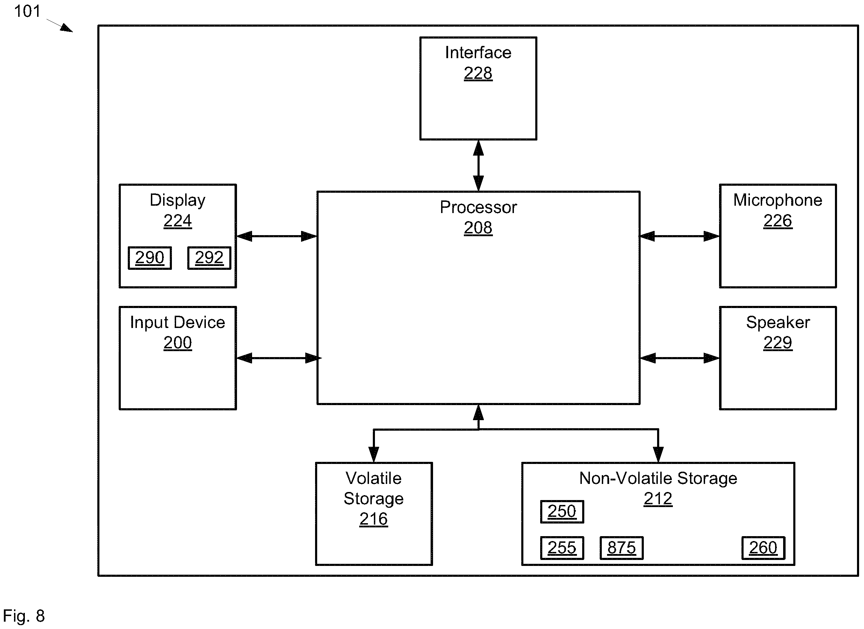

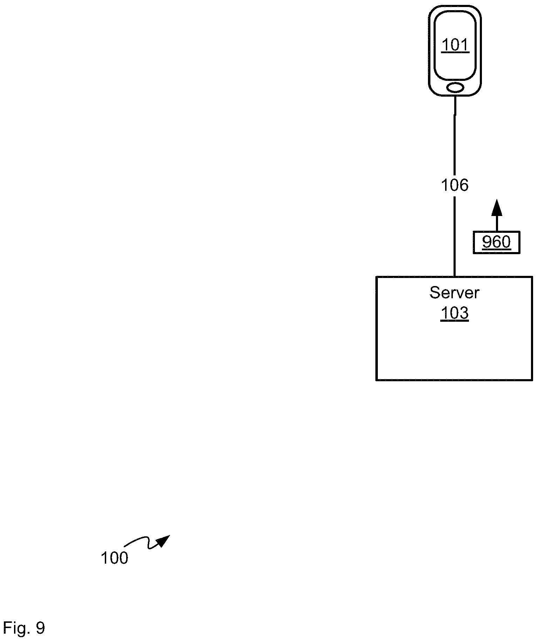

Further, method 700 will be described with reference to Figs. 8 to 11, with Figs. 8, 10 and 11 being substantially similar to Fig. 2, and Fig. 9 being substantially similar to Fig. 1, with like elements having like numbers.

At block 701, processor 208 stores store an indication 875 of unsubscribing to an electronic subscription, for example at non-volatile memory 212. In present implementations, via processing of application 250, processor 208 can be enabled to determine when unsubscribing to an electronic subscription occurs. For example, processor 208 can monitor messages 360, 501 to determine when message 360 associated with an electronic subscription is received and/or when a message 360 which can be unsubscribed to is received. Indeed, messages associated with electronic subscriptions can be identified via content of the messages: for example, such messages can include the term "unsubscribe" and the like, including but not limited an "unsubscribe" link, instructions for unsubscribing to the electronic subscription and the like. Hence, processor 208 can be enabled to monitor responses to such messages, such as request 660, and determine when associated unsubscribing has occurred.

In response to unsubscribing, processor stores indication 875, for example at non-volatile memory 212, to indicate that unsubscribing has occurred. Indeed, it is appreciated that indication 875 comprises data for identifying further messages in an electronic subscription associated with previous unsubscribing. Indication 875 generally comprises data received with message 360, including, but not limited to, an identifier of message 360, data from message 360, a domain associated with message 360, an identifier of server 103, an identifier of the associated electronic subscription and the like. For example, using the example depicted in Fig. 5, when message 360 is from "VCR Quarterly", indication 875 can comprise one or more of text "VCR Quarterly", a domain of an email address where message 360 is from (e.g. vcrquarterly.com), an IP (internet protocol) address identifying server 103 received in message 360, and the like.

It is appreciated that a format of indication 875 is generally non-limiting. Indeed, in some implementations, indication 875 can be stored at one or more of a database and a look-up table, for example at non-volatile storage 212.

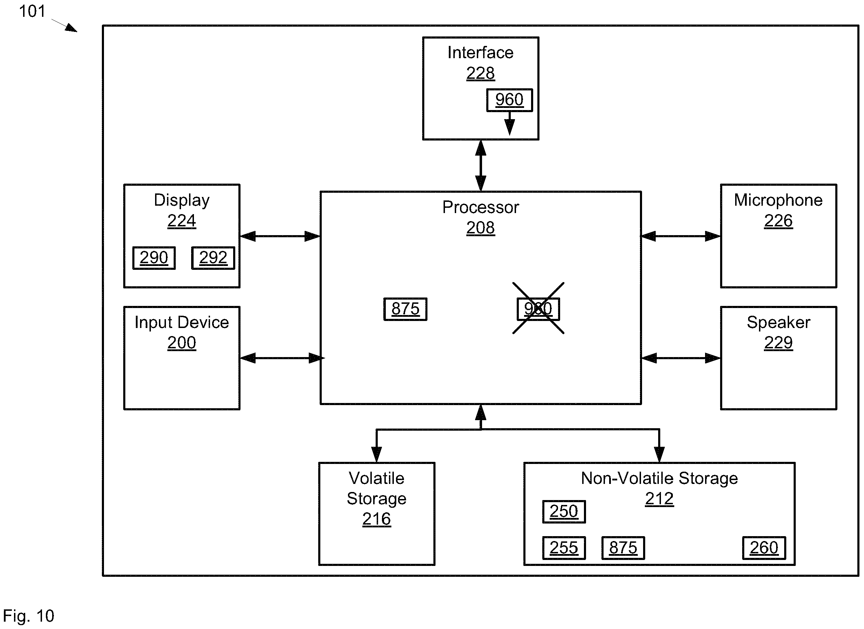

At block 703, which occurs after block 701, and with reference to Figs. 9 and 10, at least one message 960 in the electronic subscription is received at processor 208 via interface 228. In other words, in spite of device 101 unsubscribing to an electronic subscription, server 103 transmits at least one further message 960 in the electronic subscription to device 101. In any event, message 960 is received, and further message 960 is identifiable as a message in electronic subscription that has been previously unsubscribed. In particular, message 960 can be identified as a message in the electronic subscription by comparing data received with message 960 with indication 875 as indication 875 comprises data for identifying further messages in an electronic subscription associated with previous unsubscribing.

In other words, message 960 can be substantially similar to message 360 (with possibly different content in a body of message 960) and hence at least a subset of data received with message 960 will substantially similar to data received with message 360. Thus, message 960 can be identified as a message in the electronic subscription by comparing data received with message 960 with indication 875, as indication 875 comprises generally comprises data received with message 360.

In some implementations, message 960 can be identified as associated with previously unsubscribed electronic subscription by processing both message 960 and indication 875 to compare data received with message 960 with indication 875. In other implementations, message 960 can be identified as associated with previously unsubscribed electronic subscription by looking up data received with message 960 at one or more of a database and a look-up table storing indication 875. Indeed, any suitable process of identifying message 960 as a message associated with a previously unsubscribed electronic subscription is within the scope of present implementations.

Returning to Fig. 7, at block 705, processor 208 automatically prevents at least one message 960 from being stored at inbox folder 260. In other words, when message 960 is identified as being a message in an electronic subscription that was previously unsubscribed to, processor 208 prevents message 960 from being stored at inbox folder 260, and hence further prevents a rendering of message 960 from being provided at representation 292 of Fig. 5.

In other words, processor 208 automatically prevents the at least one message 960 from being stored at inbox folder 260 without an indication of the at least one message 960 being provided at device 101. Hence, processing resources of device 101 are freed for other processing activities and general use of processing resources of device 101 is reduced.

In some implementations, as depicted in Fig. 10, processor 208 receives and processes at least one message 960 to determine that at least one message 960 is in an electronic subscription that has been previously unsubscribed to, for example by further processing indication 875, and/or looking up data received with message 960 at one or more of a database and a look-up table. Processor 208 then automatically prevents at least one message 960 from being stored at inbox folder 260 by deleting at least one message 960. Hence, at least one message 960 is not persisted at device 101 and neither is at least one message 960, nor an indication thereof, rendered at device 101.

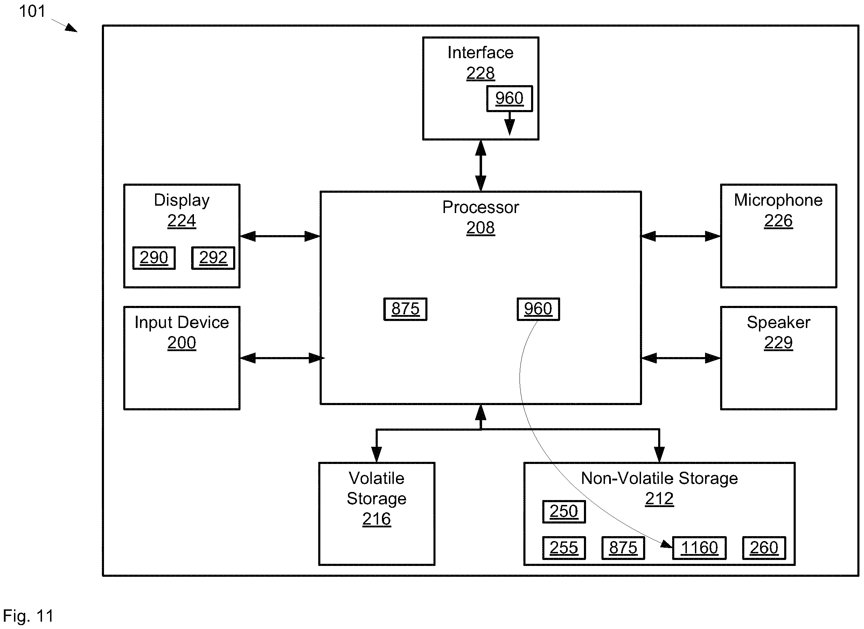

However, with reference to Fig. 11, in other implementations, processor 208 can automatically prevent the at least one message 960 from being stored at inbox folder 260 by storing the at least one message 960 in a given folder 1160 different from inbox folder 260. In some implementations, processor 960 can generate given folder 1160 when message 960 is received. In other implementations, given folder 960 comprises a deleted messages folder, which can be periodically emptied of messages stored therein, one or more of manually and automatically.

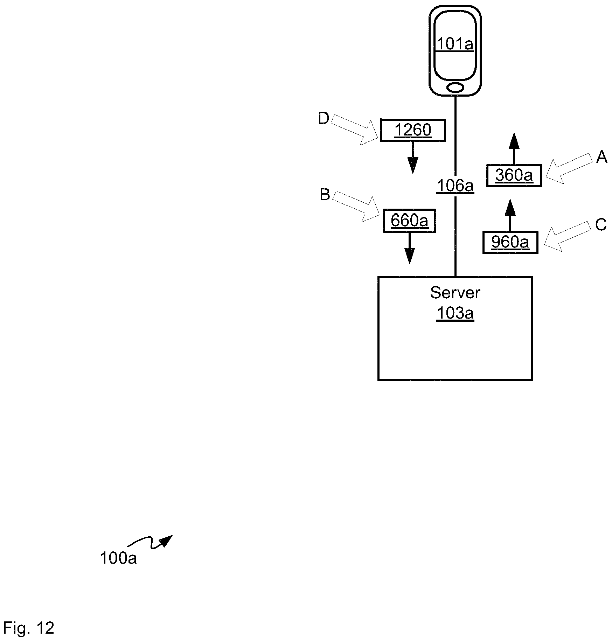

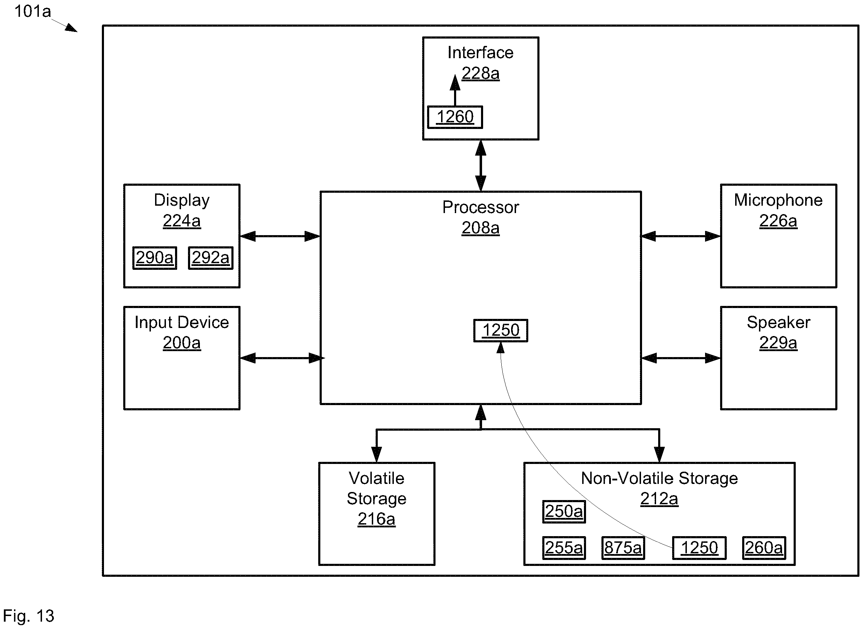

Attention is next directed to Fig. 12, which depicts a system 100a substantially similar to system 100 with like elements having like numbers, however with an "a" appended thereto. System 100a comprises a device 101a similar to device 101a and a server 100a similar to server 100. Device 101a is depicted in Fig. 13 which is substantially similar to Fig. 8, with like elements having like numbers with an "a" appended thereto. Device 101a comprises, an input device 200a, a processor 208a, a display 224a, an interface 228a, a microphone 226a, a speaker 229a, volatile storage 216a, and non-volatile storage 212a storing an application 250a, a message application 255a, an inbox folder 260a and an indication 875a. It is appreciated that method 700 can also be implemented at device 100a, for example upon processing application 250a, for example to unsubscribe from an electronic subscription associated with a message 360a received at device 101a from server 103a, similar to message 360. However, in these implementations, when unsubscribing from the electronic subscription, device 101a stores a format 1250 for the unsubscribing at non-volatile storage 212a for use in further unsubscribing to the electronic subscription. For example, when message 360a is received (e.g. "A" in Fig. 12), an unsubscribe request 660a is transmitted to server 103a from device 101a (e.g. "B" in Fig. 12).

In these implementations, processor 208a is enabled to determine the format 1250 of the unsubscribing by one or more of processing request 660a, recording steps for generating request 660a and the like. In some implementations, unsubscribing can be combination of manual and automatic processes, and the format 1250 can comprise a combination of data received in each of the manual and automatic processes, as well as instructions for unsubscribing. Indeed, it is appreciated that format 1250 comprises one or more of data and instructions for unsubscribing from an electronic subscription associated with message 360a. For example, in implementations where request 660a comprises a web page interface, format 1250 can comprise a copy of the web page interface with or without fields populated with data for unsubscribing. When fields in the copy of the web page interface are unpopulated, format 1250 can include the data for populating the fields and/or instructions on where to retrieve the data for populating the fields.

For example, in some implementations as described above, unsubscribing can include, but is not limited to, providing information in a web page interface, such as filling in fields at the web page interface. Hence, information associated with fields at the web page interface that have been manually and/or automatically filled in at web page interface can be stored in format 1250 for use in further unsubscribing to the electronic subscription. Format 1250 can also comprise an indication of a type of data that is to be filled into given fields (e.g. whether a field is for telephone number, a postal code or the like).

Hence, in these implementations method 600 can further comprise storing format 1250 for the unsubscribing of the electronic subscription at a memory, such as non-volatile storage 212a. Furthermore, format 1250 for the unsubscribing can be stored in association with indication 875a of the unsubscribing. For example, format 1250 can be stored at one or more of a database and a look-up table in association with indication 875a.

In any event, once the electronic subscription has been unsubscribed, at least one further message 960a in the electronic subscription can be received (e.g. "C" in Fig. 12), similar to message 960. In these implementations, method 700 can further comprise automatically repeating the unsubscribing in response to receiving the at least one further message 960a. For example, when message 960a is received, processor 208a automatically prevents at least one further message 960a from being stored at inbox folder 250a, as described above with reference to block 705 of method 700; method 700 further comprises automatically repeating the unsubscribing in response to receiving the at least one further message 960a. In other words, as message 960a is associated with an electronic subscription that was unsubscribed, and hence should not have been received, processor 208a repeats the unsubscribing process described above.

For example, as depicted in Fig. 13, processor 208a processes format 1250 to generate another request 1260 similar to request 660a to attempt to again unsubscribe from the electronic subscription. As format 1250 comprises one or more of data and instructions for unsubscribing from an electronic subscription associated with message 360a, when format 1250 is processed, processor 208a can automatically generate and transmit request 1260 via interface 228a. For example, "D" of Fig. 12. It is appreciated that when yet further messages in the electronic subscription are received, yet further unsubscribe requests can be generated and transmitted using format 1250.

However, in some implementations, device 101a can be enabled to trigger remedial, after a threshold number of attempts to unsubscribe. In other words, when a threshold number of attempts to automatically unsubscribe have occurred, it can be determined that format 1250 can be incorrect, and hence, for example, an indication of unsuccessful unsubscribing can be provided at display 224a to trigger remedial action, such as a manual attempt at unsubscribing. Format 1250 can be regenerated on the basis of the remedial action for yet further automatic unsubscribing as described above.

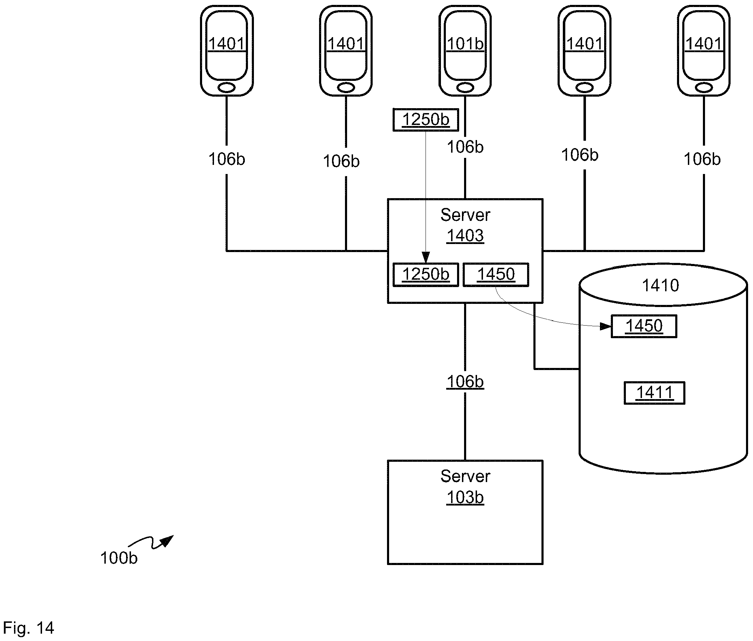

Attention is next directed to Fig. 14 which depicts a system 100b similar to system 100a, with like elements having like numbers with a "b" appended thereto rather than an "a". Hence, device 101b is similar to device 100a, and server 103b is similar to server 103a. However, system 100b further comprises a server 1403 enabled to manage messages for a plurality of communication devices 1401, including device 101b. While four devices 1401 are depicted in Fig. 14, it is appreciated that system 100b can comprise any suitable number of devices 1401. Server 1403 is in communication with device 101b, 1401 and server 103b via links 106b, similar to link 106 described above.

System 100b further comprises a server accessible memory 1410, including but not limited to a database, memory 1410 accessible to server 1403. Memory 1401 can be local to server 1403, remote to server 1403 and/or a combination. In some implementations, server 1403 can comprise memory 1403. In any event, memory 1401 stores data 1411 comprising data associated with one or more of devices 101b, 1401, including, but not limited to, identifiers of devices 101b, 1401, telephone numbers associated with devices 101b, 1401, postal codes associated with devices 101b, 1401, and the like. Data 1411 can be provisioned, for example, for each device 101b, 1401 when each device 101b, 1401 is registering with server 1403 for services.

In any event, method 700 can be implemented in any of devices 101b, 1401 and server 1403. In other words, server 1403 can be enabled to manage subscriptions on behalf of devices 101b, 1401, as will presently be described.

It is assumed in Fig. 14 that method 700 has been implemented at device 101b due to at least one message being received at device 101b associated with an electronic subscription that was unsubscribed, as described above. It is further assumed in Fig. 14 that device 101b has generated a format 1250b for the unsubscribing, similar to format 1250b. However, in these implementations, format 1250b is transmitted to server 1403.

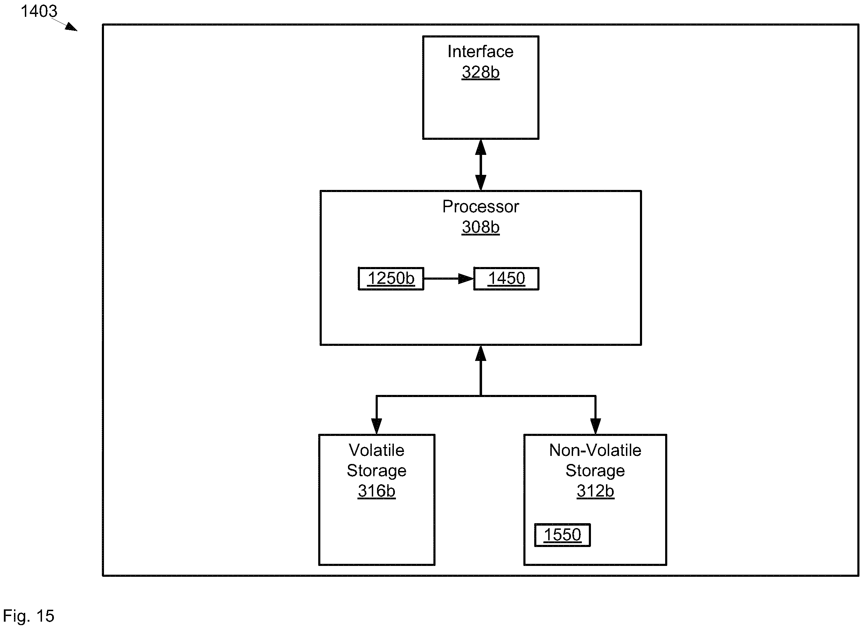

Hence attention is further directed to Fig. 15 which depicts a schematic of server 1403; Fig. 14 is substantially similar Fig. 3, with like elements having like numbers, however with a "b" appended thereto. Hence server 1403 comprises a processor 308b, non-volatile storage 312b, volatile storage 316b and an interface 328b. Non-volatile storage 312b stores an application 1550 for managing electronic subscriptions on behalf of devices 101b, 1401, which can be processed by processor 308b.

When server 1403 receives format 1250b, server 1403 processes format 1250b to generate a form 1450 that can be populated with data 1411 to generate a request for unsubscribing from an electronic subscription at server 103b on behalf of one or more of devices 101b, 1401.

For example, server 1403 can process format 1250b to indentify fields that can be populated using data 1411, and remove data from those fields that were previously populated at device 101b. For example, format 1250b comprises a copy of the web page interface with or without fields populated with data for unsubscribing, as described above. Server 1250b can be enabled to identify the fields that can be used to populate the fields on behalf of a given device 101b, 1401. This information can be stored at form 1450, and form 1450 can be stored at memory 1410 and/or at non-volatile storage 312b. Form 1450 can then be used by server 1403 to unsubscribe to an electronic description on behalf of one or more of the plurality of devices 101b, 1401.

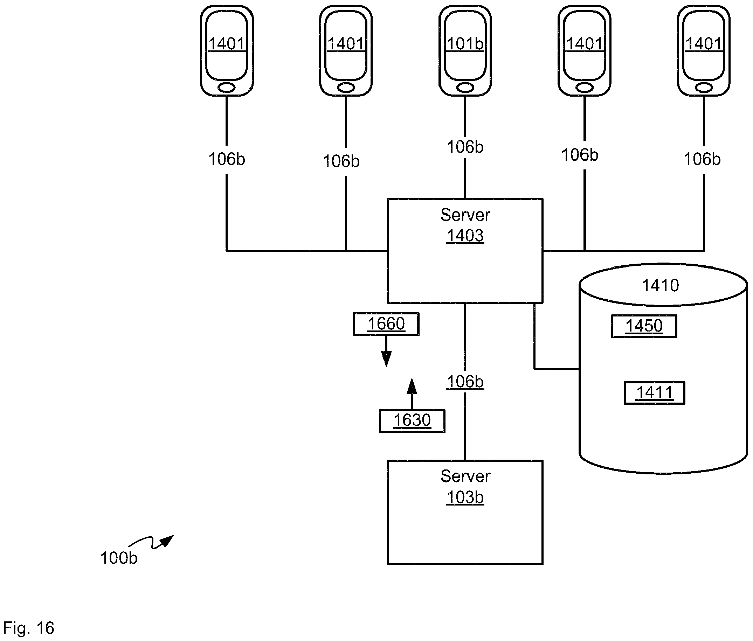

For example, attention is directed to Fig. 16, which is substantially similar to Fig. 14, with like elements having like numbers. In Fig. 16, it is assumed that form 1450 has been generated, and server 1403 has received a message 1630 from server 103b, in an electronic subscription, on behalf of one or more of devices 101b, 1401. In other words, message 1630 is transmitted by server 103b to one or more of devices 101b, 1401, via server 1403.

It is further assumed in Fig. 16 that server 103b has determined that the electronic subscription associated with message 1630 is to be unsubscribed on behalf of the one or more of devices 101b, 1401 to which message 1630 is transmitted.

For example, one or more of devices 101b, 1401 can transmit an indication to server 1403 that no further messages associated with the electronic subscription are to be received. Alternatively, method 700 can be implemented at server 1403 and message 1630 can represent a further message in an electronic subscription was has been unsubscribed.

In either case, server 1403 responds to message 1630 by generating a request 1660 to unsubscribe from the electronic subscription by populating form 1450 with a subset of data 1411 associated the one or more of devices 101b, 1401 to which message 1630 was transmitted. In some implementations, server 1403 can further prevent message 1630 from reaching the one or more devices 101b, 1401 to which message 1630 is transmitted, for example by deleting message 1630. Hence, in these implementations, server 1403 not only filters message 1630 on behalf of one or more of devices 101b, 1401, but also automatically unsubscribes one or more of devices 101b, 1401 from an associated electronic subscription.

Hence, in these implementations, method 700 can further comprise storing a format for the unsubscribing at a server accessible memory accessible to a server enabled to manage messages for a plurality of communication devices, such that the server can unsubscribe to the electronic description on behalf of one or more of the plurality of the communication devices. Such an implementation saves both bandwidth between server 1403 and devices 101b, 1401, but also reduces processing resources at each of devices 101b, 1401 as each of devices 101b, 1401 no longer has to process messages received in unsubscribed electronic subscriptions.

Those skilled in the art will appreciate that in some implementations, the functionality of devices 101, 101a, 101b, 1401 and servers 103, 103a, 103b can be implemented using pre-programmed hardware or firmware elements (e.g., application specific integrated circuits (ASICs), electrically erasable programmable read-only memories (EEPROMs), etc.), or other related components. In other implementations, the functionality of devices 101, 101a, 101b, 1401 and servers 103, 103a, 103b can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A communication device (101, 101a, 101b, 1403) comprising:
a processor (208, 208a, 308b) and a communication interface (228, 228a, 328b),
the processor (208, 208a, 308b) enabled to:
store an indication of unsubscribing to an electronic subscription; and thereafter:
receive, via the communication interface (228, 228a, 328b), at least one message in the electronic subscription; and,
automatically prevent the at least one message from being stored at an inbox folder in a memory (212, 212a, 312b) associated with the communication device (101, 101a, 101b, 1403).

2. The communication device (101, 101a, 101b, 1403) of claim 1, wherein the processor (208, 208a, 308b) is further enabled to automatically prevent the at least one message from being stored at the inbox folder by deleting the at least one message.

3. The communication device (101, 101a, 101b, 1403) of claim 1 or 2, wherein the processor (208, 208a, 308b) is further enabled to automatically prevent the at least one message from being stored at the inbox folder by storing the at least one message in a given folder different from the inbox folder.

4. The communication device (101, 101a, 101b, 1403) of claim 3, wherein the given folder comprises a deleted messages folder.

5. The communication device (101, 101a, 101b, 1403) of any previous claim, wherein the processor (208, 208a, 308b) is further enabled to automatically prevent the at least one message from being stored at the inbox folder without an indication of the at least one message being provided at the communication device (101, 101a, 101b, 1403).

6. The communication device (101, 101a, 101b, 1403) of any previous claim, wherein the processor (208, 208a, 308b) is further enabled to automatically repeat the unsubscribing in response to receiving the at least one further message.

7. The communication device (101, 101a, 101b, 1403) of any previous claim, wherein the processor (208, 208a, 308b) is further enabled to store a format for the unsubscribing at the memory (212, 212a, 312b) for use in further unsubscribing to the electronic subscription.

8. The communication device (101, 101a, 101b, 1403) of any previous claim, wherein the format for the unsubscribing is stored in association with the indication of the unsubscribing.

9. The communication device (101, 101a, 101b, 1403) of claim 8, wherein the processor (208, 208a, 308b) is further enabled to store a format for the unsubscribing at a server (1403) accessible memory (212, 212a, 312b) accessible to a server (1403) enabled to manage messages for a plurality of communication devices (101, 101a, 101b, 1403, 1401), such that the server (1403) can unsubscribe to the electronic description on behalf of one or more of the plurality of the communication devices (101, 101a, 101b, 1403, 1401).

10. A method comprising:
at a communication device (101, 101a, 101b, 1403) comprising a processor (208, 208a, 308b) and a communication interface (228, 228a, 328b), storing an indication of unsubscribing to an electronic subscription; and thereafter:
receiving, via the communication interface (228, 228a, 328b), at least one message in the electronic subscription; and,
automatically preventing, via the processor (208, 208a, 308b), the at least one message from being stored at an inbox folder in a memory (212, 212a, 312b) associated with the communication device (101, 101a, 101b, 1403).

11. The method of claim 10, wherein the automatically preventing the at least one message from being stored at the inbox folder comprises one or more of:
deleting the at least one message; and
storing the at least one message in a given folder different from the inbox folder.

12. The method of claim 10 or 11, wherein the automatically preventing the at least one message from being stored at the inbox folder occurs without an indication of the at least one message being provided at the communication device (101, 101a, 101b, 1403).

13. The method of any of claims 10 to 12, further comprising automatically repeating, at the processor (208, 208a, 308b), the unsubscribing in response to receiving the at least one further message.

14. The method of any of claims 10 to 13, further comprising storing a format for the unsubscribing at the memory (212, 212a, 312b) for use in further unsubscribing to the electronic subscription.

15. A computer program product, comprising a computer usable medium having a computer readable program code adapted to be executed to implement a method comprising:
at a communication device (101, 101a, 101b, 1403) comprising a processor (208, 208a, 308b) and a communication interface (228, 228a, 328b), storing an indication of unsubscribing to an electronic subscription; and thereafter:
receiving, via the communication interface (228, 228a, 328b), at least one message in the electronic subscription; and,
automatically preventing, via the processor (208, 208a, 308b), the at least one message from being stored at an inbox folder in a memory (212, 212a, 312b) associated with the communication device (101, 101a, 101b, 1403).
